# EUROPEAN PATENT APPLICATION

(11) **EP 1 990 724 A1**
(43) Date of publication of application: **12.11.2008**
(21) Application number: 07107800.0
(22) Date of filing: 09.05.2007
(51) Int. Cl.: G06F 12/02, G06F 11/36

(54) **Method for locating resource leaks during software development**

(71) Applicant: TELEFONAKTIEBOLAGET LM ERICSSON (publ), 164 83 Stockholm (SE)
(72) Inventor: Roos, Johan, SE-227 60, LUND (SE)
(74) Representative: Bratt, Hanna Catharina

(57) **Abstract**

Disclosed is a method and a system for identifying a resource allocation in computer program code. The method comprises the steps of identifying computer program code that initiates a resource allocation process, generating a certificate for the identified computer program code and storing the certificate as a parameter in the computer program code initiating the resource allocation process, and performing a resource allocation call including the certificate from the identifying step.

## Description

### Technical field

The present invention relates to resource allocation in connection with software development. More particularly, the invention relates to a method for allocating resources such as memory in a process of steps in order to trace resource leaks such as memory leaks in software development.

### Background

In computer science, a memory leak is a particular kind of unintentional memory consumption by a computer program where the computer program fails to release memory when no longer needed.

A memory leak has similar symptoms as a number of other problems and can generally only be diagnosed by a software developer with access to the computer program source code, hereinafter referred to as computer program code.

A memory leak can diminish the performance of a system by reducing the amount of available memory. Memory allocation can be a component of the operating system or a component in a process or program, therefore the result of a memory leak is usually an ever growing amount of memory being used by the system as a whole or by the erroneous process or program.

Eventually, in the worst case, too much of the available memory may become allocated and all or part of the system or device stops working correctly and/or the applications fails.

Memory leaks can cause more serious implications if:
● The program is left running and consumes more and more memory over time (such as background tasks, on servers, but especially on embedded devices which may be left running for many years).
● The program is able to request memory (e.g. shared memory) that is not released, even when the program terminates.
● The leak is happening inside the operating system.
● The memory is very limited e.g. in an embedded system or portable device.

Memory leaks are a common error in software development, especially when using programming languages that have no automatic garbage collection i.e. automatic memory management, such as C and C++. Typically, a memory leak occurs because dynamically allocated memory has become unreachable.

If a program has a memory leak and its memory usage is steadily increasing, this will usually not be noticeable immediately. Almost all systems have a certain amount of available memory, which can be consumed by programs. Eventually, the available memory, e.g. Random Access Memory (RAM), may run out. This may have one of two effects:
● On systems where all memory is in RAM, there will be an immediate failure.
● Most modern operating systems on general purpose computers use a hard disk to provide virtual memory. The effect once RAM has run out is increasing use of the hard disk instead. The hard disk can in turn eventually run out, but usually the performance of the application and/or system will have become so slow that they will be considered to have failed before that point.

As mentioned above, a memory leak typically occurs because dynamically allocated memory has become unreachable. Without access to the computer program code, a software developer noticing symptoms in a process or program can only guess that there might be a memory leak.

Therefore, memory leaks that occur during software development pose a problem. Detecting that a memory leak is present is relatively easy for a skilled person in the art, i.e. a software developer, however locating which part of the computer program code that is responsible for freeing the "leaking" memory can be relatively hard to do and extremely time consuming for software developers.

Other resources than memory, e.g. file handlers, ports or sockets, could also be handled in the same manner.

Existing solutions for identifying memory leaks have the drawback of just being able to identify the file and line of the actual memory allocation call. This information is insufficient since the software developer also needs to identify the computer program code that initiates the memory allocation call which may differ from the computer program code that in fact uses the allocated memory.

Furthermore, existing solutions for identifying memory leaks have the drawback of being too complex to be implemented and used in an embedded system, such as a mobile device.

US 2005/0144410 discloses a method and a system for a data structure within a block of allocable memory of a memory structure such as a heap which is used to identify the function that is responsible for causing memory problems such as random overwrites, buffer overruns, double or multiple "frees", and the like. The data structure can use the return address of the function that allocates or frees the allocable memory block to identify the caller. An identifier for the function is generated and stored in the allocable memory block.

Even though the above prior art provides a method for managing memory leaks, the disclosed method does not identify the computer program code that initiates the memory allocation call. Instead the method identifies the computer program code that in fact uses the allocated memory. Hence, the above method still requires locating the computer program code that initiates the memory allocation call and it remains a problem to provide a method for identifying the computer program code that initiates the memory allocation call and that solves above problems.

US 6658652 discloses a method and a system for detecting memory leaks in an object-oriented environment during real-time trace processing. During the profiling of a program executing in a data processing system, a profiler processes events caused by the execution of the program, and the profiler maintains a profile data structure containing execution-related metrics for the program. The execution-related metrics may include object allocation and deallocations metrics that are associated with object processing initiated on behalf of an executing method. An object allocator allocates objects during the execution of the program and modifies object allocation metrics in the profile data structure. Object metrics are stored in a particular location and a pointer to that location is stored in a hash table associated with the object's ID. In another embodiment the pointer to the location is stored in a shadow heap in the same relative position as the position of the object in the heap. The object allocation metrics and the object deallocation metrics may be compared to identify memory leaks.

Even though the above prior art method provides a method for managing memory leaks, the mentioned method does not identify the computer program code that initiates the memory allocation call. Instead the method identifies the computer program code that in fact uses the allocated memory. Hence, the above method still requires locating the computer program code that initiates the memory allocation call and it remains a problem to provide a method for identifying the computer program code that initiates the memory allocation call and that solves the above problems.

Furthermore, the above prior art method does not provide a possibility for the software developer to, in the computer program code, free the memory himself.

### Summary

The method described herein relates to identifying a resource allocation in computer program code. The method comprises the steps of identifying computer program code that initiates a resource allocation process, generating a certificate for the identified computer program code and storing the certificate as a parameter in the computer program code initiating the resource allocation process, and performing a resource allocation call including the certificate from the identifying step.

Further, the resource allocation call step comprises performing a function call.

By allocating resources in such steps, the part of the computer program code that initiates the resource allocation process can be easily traced in case of a resource leak. The resources may comprise memory, file handlers, ports or sockets etc.

Moreover, the generated certificate is also stored in a table which further comprises the adhering file and line data of the computer program code that initiates the memory allocation process.

In another embodiment, a function returns a pointer via a memory handler to newly allocated memory whereby a debug heap implementation wraps the function inside a macro. The macro can then find the adhering file and line data as the macro is expanded at the place of the memory allocation.

In another embodiment, a test procedure establishes if memory is leaking in the computer program code. The test procedure indicates a memory leak being present in the computer program code and the memory leak is traced via the stored certificate to the responsible computer program code that initiates the memory allocation process.

An advantage of a method that allocates memory in such steps according to embodiments of the invention is that the method enables easy trace of a memory leak in computer program code. Furthermore, embodiments of the invention enable linking the computer program code that initiates the memory allocation process to the actual memory allocation.

A further advantage of a method that allocates memory in such steps according to embodiments of the invention is that the method is also applicable for programming languages for use in hardware development.

Moreover, a trace environment, which is a tool for creating structured trace output that can be displayed and analyzed, is not necessary anymore.

Further, the computer program code may comprise an operating system, an application, an algorithm, and a driver.

In yet another embodiment, a data processing system configured to perform the steps of the above method further comprises a system memory which in turn comprises a Read Only Memory and a Read Access Memory including a heap Application Programming Interface.

Embodiments of the invention will now be described more in detail in connection with the enclosed drawings.

### Brief description of the drawings

Figure 1 illustrates a data structure adapted for dynamic memory allocation according to an embodiment of the invention.
Figure 2 illustrates a flow chart of an embodiment of the invention.
Figure 3 illustrates another flowchart of an embodiment of the invention.
Figure 4 illustrates another data structure according to an embodiment of the invention.
Figure 5 illustrates a system memory according to an embodiment of the invention.

### Detailed description

To facilitate an understanding of the following embodiments, many aspects are described in terms of sequences of actions that can be performed by elements of a computer system. For example, it will be recognized that in each of the embodiments, the various actions can be performed by specialized circuits or circuitry (e.g., discrete logic gates interconnected to perform a specialized function), by program instructions being executed by one or more processors, or by a combination of both.

Moreover, the sequences of actions can be embodied in any computer readable medium for use by or in connection with an instruction execution system, apparatus, or device, such as a computer based system, processor containing system, or other system that can fetch the instructions from a computer readable medium and execute the instructions.

As used herein, a computer readable medium can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a non exhaustive list) of the computer readable medium can include the following: an electrical connection having one or more wires, a random access memory (RAM), a read only memory (ROM), an erasable programmable read only memory (EPROM or Flash memory), and an optical fiber.

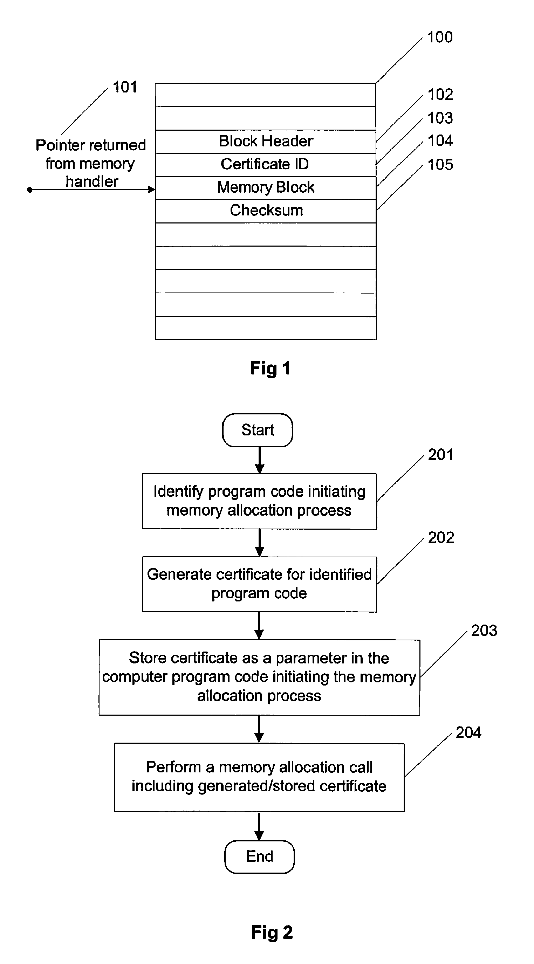

Figure 1 illustrates a data structure adapted for dynamic memory allocation according to an embodiment of the invention. Figure 1 illustrates a function, e.g. xxxAlloc(), returning a pointer (101) via a memory handler to newly allocated memory. A debug heap implementation (100) wraps this function inside a macro, e.g. HEAP_ALLOC(). The macro can then find the file and line data via a certificate ID (103) as the macro is expanded at the place of the memory allocation. This information is stored together with the allocated memory block (104), usually just before the memory block is returned to the caller of the memory allocation process. The debug heap implementation (100) further comprises a block header (102) and a checksum (105). For a non-debug heap implementation adapted for executing the computer program code in a non-debug mode, the memory allocation process according to embodiments of the invention is disabled and replaced with empty function calls where they are not needed. The memory allocation process according to embodiments of the invention is disabled by replacing macros with empty function calls depending on if debug mode is enabled or not.

Figure 2 illustrates a flow chart of an embodiment of the invention. A computer program code that is responsible for initiating a memory allocation process (step 201) is identified whereby a certificate is generated for the identified computer program code (step 202). The certificate is stored as a parameter in the computer program code initiating the memory allocation process (step 203). Thereafter, a memory allocation call is performed (step 204) wherein the memory allocation call includes the generated and stored certificate for the computer program code which is responsible for initiating the memory allocation process.

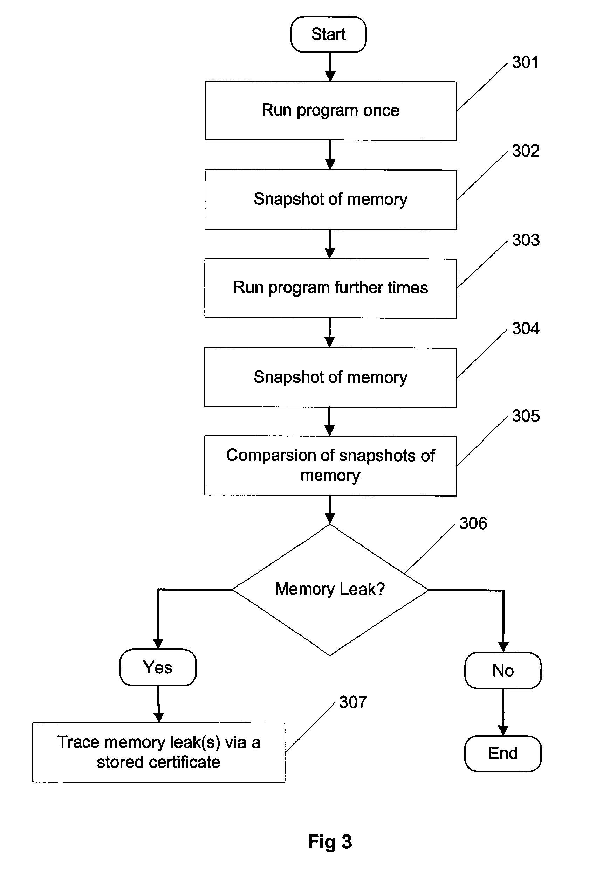

Figure 3 illustrates another flowchart of an embodiment of the invention. More specifically, the flowchart illustrates a test procedure for tracing memory leaks, if any are present in the computer program code. The computer program code is run once (step 301), thereafter a first snapshot of the memory is established (step 302). Subsequently, the computer program code is run further times (step 303) and thereafter a second snapshot of the memory is established (step 304). The following step (step 305) comprises a comparison of the first and the second snapshot of memory and if a memory leak is present in the computer program code (step 306) which is indicated by the comparison of the snapshots of memory, e.g. by indicating a growing memory usage for each execution of the computer program code, then the memory leak is traced via a stored certificate to the computer program code which is responsible for initiating the memory allocation process (step 307). If the comparison of the first and the second snapshot of memory (step 305) indicates that no memory leak is present (step 306), then the process ends.

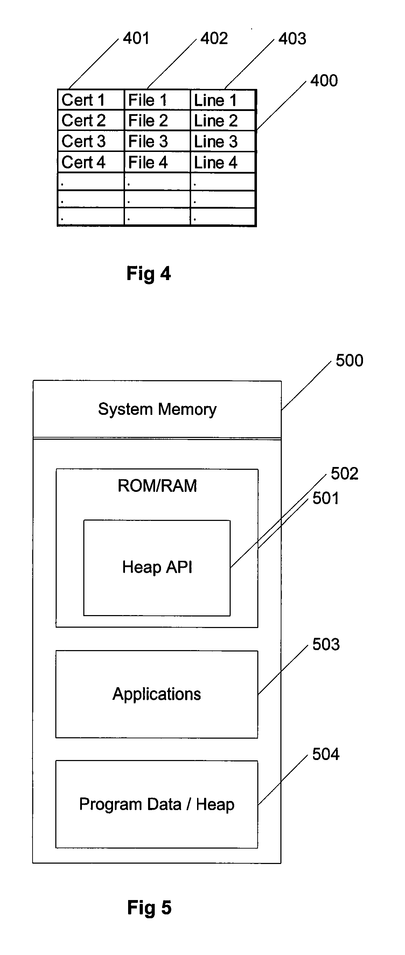

Figure 4 illustrates another data structure according to an embodiment of the invention. The data structure, i.e. a table (400), comprises the stored certificates (401) with adhering data such as file (402) and line data (403) in the computer program code. By means of this table, the computer program code which is responsible for initiating the memory allocation process is easily traced. The adhering certificate data: "file", which is stored in the data structure, e.g. a database, is not necessarily a file name. Since file names take up a considerable amount of memory, a preferable solution is to identify file names with a number instead. This means that the debug heap implementation can be considerably larger during testing by identifying file names with numbers. The macro which allocates the certificate then matches the file name to a number, i.e. a file ID, in a table and the file ID is then stored in the data structure comprising the certificate data, i.e. the database. The table which matches the file names with the file IDs is then also available after running the computer program code in order to match the leaking memory block with the correct file name.

Figure 5 illustrates a system memory according to an embodiment of the invention. The system memory (500) comprises a Read Only Memory (ROM) (501) and/or Read Access Memory (RAM) (501) including a heap Application Programming Interface (API) (502) wherein the API is an interface that a computer system provides to support requests for services to be made of it by a computer program.

The system memory (500) further comprises applications (503) and program data which typically includes one or more heaps (504) wherein a heap is a pool of unused memory. Furthermore, the system memory (500) also comprises an operating system which includes the heap API (502), algorithms, and drivers.

The method described herein relates to allocating memory in a process of following steps, wherein a first step is performed by computer program code that initiates a memory allocating process and a second step is performed by an actual memory allocation. By allocating memory in such steps, the part of the computer program code that initiates the memory allocation process can be easily traced in case of a memory leak.

More specifically, the process of allocating memory is performed in following steps:
1. First, a certificate for the memory has to be collected. This is done by calling a memory handler and requesting a certificate. The memory handler generates a unique certificate, for example a 32 bit number. This certificate is stored in a database and the file and line of the caller of the memory allocation process is stored together with the certificate. This could be wrapped in a macro, like HEAP_ALLOC_CERTIFICATE(), that returns a certificate identifier (ID) to the caller.
2. The second step is the actual memory allocating call to the memory handler. In this call, the certificate ID received in step 1 needs to be supplied. If a correct certificate is supplied, the memory handler returns a pointer to the allocated memory block.

A correct certificate, as referred to in step 2, is a certificate which is present in the database. Therefore, a memory allocation call with a certificate ID which has not been allocated before is incorrect and not valid.

In practice, this means that computer program code that needs to allocate memory, but does not free the memory itself, has to be provided with a certificate for memory allocation. However, whether all computer program code or only parts of it should be provided with certificates for memory allocation is optional and is more of a design question for the specific case. The computer program code requests that the certificate should free the memory. However, the certificate itself does not free the memory. Instead a special function, e.g. HEAP_FREE, acts as a stand-in function for the normal free function. If a memory leak is present in the computer program code, the culprit can be found by finding the part of the computer program code that initiated a memory allocating process, which in turn caused the leaking memory, via the certificate.

Furthermore, additional information exists that can be associated with a certificate, for example:
1. If the certificate should be constrained to a one-time only allocation.
2. If the certificate should allow several allocations.

If the certificate is constrained to a one-time only allocation, the certificate and the matching memory block which should be freed can be excluded from the database at the first function call to HEAP_FREE.

If the certificate allows for several allocations then the certificate is not excluded from the database since it is needed for possible further memory allocations and memory frees. In this case, a new function should be used that deallocates the certificate when it is no longer needed.

Example 1 illustrates an exemplary C computer program code version of the memory allocation process according to embodiments of the invention in the block of computer program code. Example 1 is provided to illustrate an actual block of computer program code using embodiments of the invention. More specifically, when including an external library such as AllocDocument. The // denotes comments to the computer program code.

### Example 1:

```
 void functionA() {
  long memoryCertificate = HEAP_ALLOC_CERTIFICATE();
  Document_t* doc = AllocDocument(memoryCertificate);
  HEAP_FREE(&doc);
 }
 void functionB() {
  long memoryCertificate = HEAP_ALLOC_CERTIFICATE();
  Document_t* doc = AllocDocument(memoryCertificate);
 }
 Document_t* AllocDocument(long certificate) {
   return
 (Document_t*)HEAP_CERTIFIED_ALLOC(Document_t,cetificate);
 }
 int main() {
  functionA () ;
  functionB () ;
  // As functionB fails to free the memory this code leaks.
  // The leak can be located to functionB as the file and
```

```
  // line number in the debug heap points to functionB and
  // not to AllocDocument as in the normal case.
v // In the normal case, only the file and line of
  // AllocDocument would show up as the leaking place.
  // In a more complicated situation all possible callers to
  // AllocDocument would have to be examined.
 }
```

HEAP_ALLOC and HEAP_UNTYPED_ALLOC are macros. The properties of macros enables the macro to expand in its place in the computer program code which renders the _FILE_and_LINE_macros (that are included in the HEAP_macros) to expand correctly and to be inserted into the debug heap.

AllocDocument is an example of an implementation of including an external library, e.g. often such libraries encapsulate memory allocations in a function in order to facilitate porting of the code. In this case, only one malloc call for freeing memory needs to be replaced instead of all portions of the computer program code where memory allocations are occurring.

Furthermore, AllocDocument could also be implemented as a macro and in this case go up one step in the function call chain. With this method one obtains more information about where the memory allocation is occurring while still staying inside the library.

It should be emphasized that the term "comprises/comprising" when used in this specification is taken to specify the presence of stated features, integers, steps or components but does not preclude the presence or addition of one or more other features, integers, step, components or groups thereof.

## Claims

1. A method for identifying a resource allocation in computer program code comprising the following steps: identifying computer program code that initiates a resource allocation process, generating a certificate for the identified computer program code and storing the certificate as a parameter in the computer program code initiating the resource allocation process, and performing a resource allocation call including the certificate from the identifying step.

2. A method according to claim 1, wherein the resource comprises memory.

3. A method according to claim 1, wherein the resource comprises file handlers.

4. A method according to claim 1, wherein the resource comprises ports and sockets.

5. A method according to claim 2, wherein the certificate is also stored in a table which further comprises adhering file and line data of the computer program code that initiates the memory allocation process.

6. A method according to claim 2 or 5, wherein a function returns a pointer via a memory handler to newly allocated memory.

7. A method according to claim 6, wherein a debug heap implementation wraps the function inside a macro.

8. A method according to claim 2, further comprising the step of performing a test procedure for establishing if memory is leaking in the computer program code.

9. A method according to claim 8, wherein the test procedure step comprises indicating a memory leak being present in the computer program code and tracing the memory leak via the stored certificate to the responsible computer program code that initiates the memory allocation process.

10. A method according to any of claims 1 through 9, wherein the computer program code comprises an operating system.

11. A method according to any of claims 1 through 9, wherein the computer program code comprises an application.

12. A method according to any of claims 1 through 9, wherein the computer program code comprises an algorithm.

13. A method according to any of claims 1 through 9, wherein the computer program code comprises a driver.

14. A method according to claim 2, wherein the memory allocation call step comprises performing a function call.

15. A method according to claim 1, wherein the certificate is associated with additional information regarding a constraint to a one-time only allocation.

16. A method according to claim 1, wherein the certificate is associated with additional information regarding a constraint to a set number of allocations.

17. A data processing system configured to perform the steps of the method according to any one of claim 1 through 16.

18. A data processing system according to claim 17, further comprising a system memory.

19. A data processing system according to claim 18, wherein the system memory comprises a Read Only Memory and a Read Access Memory including a heap Application Programming Interface.

20. A computer program product comprising computer-executable computer program code means adapted to cause a data processing system to perform the method according to any one of claims 1 through 16, when the computer program code means are executed by a data processing system.

21. A computer program product according to claim 20, comprising a computer-readable medium having stored thereon the computer program code means.
